# EUROPEAN PATENT APPLICATION

(11) **EP 4 224 977 A1**
(43) Date of publication of application: **09.08.2023**
(21) Application number: 22160984.5
(22) Date of filing: 09.03.2022
(51) Int. Cl.: H04W 74/08, H04W 48/18

(54) **RADIO COMMUNICATION APPARATUS AND RADIO COMMUNICATION METHOD**

(30) Priority: 07.02.2022 JP 2022017512
(71) Applicant: Sharp Kabushiki Kaisha, Sakai-shi Osaka 590-8522 (JP)
(72) Inventor: NAMBA, Hideo, Osaka, 590-8522 (JP); YAMADA, Ryota, Osaka, 590-8522 (JP)
(74) Representative: Müller Hoffmann & Partner

(57) **Abstract**

A radio communication apparatus that communicates with a base station apparatus and another radio communication apparatus includes a receive circuitry that receives a radio frame, a transmit circuitry that transmits a radio frame, and a control circuitry that controls transmission and/or reception of a radio frame. The receive circuitry receives a radio frame, a PHY header of the received radio frame is demodulated, and in a case that first information, included in the PHY header currently being received, to identify a radio system indicates a radio system where the radio communication apparatus belongs and that a predetermined condition is satisfied, a radio frame is transmitted to fit within NAV of the PHY header currently being received.

## Description

### Technical Field

The present invention relates to a communication apparatus and a communication method.

### Background Art

The Institute of Electrical and Electronics Engineers Inc. (IEEE) has been continuously working on updating of the IEEE 802.11 specification that is a wireless Local Area Network (LAN) standard in order to achieve an increase in speed and frequency efficiency of the wireless LAN networks. In a wireless LAN, it is possible to perform radio communication using unlicensed bands that can be used without being allowed (licensed) by nations or regions. For applications for individuals, such as domestic use, Internet access from inside residences has been wirelessly established by, for example, including wireless LAN access point functions in line termination apparatuses for connection to a Wide Area Network (WAN) line such as the Internet or connecting wireless LAN access point apparatuses (APs) to line termination apparatuses. In other words, wireless LAN station apparatuses (STAs) such as smartphones and PCs can associate to wireless LAN access point apparatuses and access the Internet.

Designing of the specification of IEEE 802.1 1ax has been completed in February 2021, and wireless LAN devices that are compliant with the specification and communication devices such as smartphones and Personal Computers (PCs) with wireless LAN devices equipped therein have appeared on the market as products that are compatible with Wi-Fi6 (trade name; a name for IEEE-802.11ax compliant products certified by the Wi-Fi Alliance). Also, activities for standardizing IEEE 802.11be as a standard subsequent to IEEE 802.11ax has been started in recent days. With the rapid distribution of wireless LAN devices, further improvement in throughput per user in environments where wireless LAN devices are densely disposed has been studied in the standardization of IEEE 802.11be.

According to the IEEE 802.1 In and following standards, a mechanism of frame aggregation has been introduced as a throughput speed-up technology through reduction of an overhead. Frame aggregation is roughly classified into an Aggregated MAC Service Data Unit (A-MSDU) and an Aggregated MAC Protocol Data Unit (A-MPDU). While the frame aggregation enables transmission of a large amount of data at once and improves the transmission efficiency, the probability of a transmission error is increased. Thus, IEEE 802.11ax and following standards are expected to include efficient error control on each MPDU in addition to improvement of transmission efficiency through frame aggregation as the main underlying technologies for increasing the speed of throughput. Also, a mechanism for increasing TXOP such as OFDMA and inter-BSS spatial reuse has been incorporated, and improvement in transmission efficiency is expected thereby.

### Citation List

### Non Patent Literature

NPL 1: IEEE 802.11-20/1046-08-0be, July. 2020

### Summary of Invention

### Technical Problem

With increasing popularity of wireless LAN devices, areas where wireless LAN devices are used have spread in city areas, and a two-digit number of wireless LAN devices have been used depending on locations. In a case that the traffics are increased in number in such a dense environment and that a radio medium access based on Carrier Sense Multiple Access (CSMA) used in the IEEE 802.11 specification is performed, transmission efficiency decreases due to a decrease in time during which TXOP can be ensured due to occurrence of collision and occurrence of exposed terminals. The IEEE 802.11ax standard employs the Inter-BSS spatial reuse techniques to alleviate a part of this problem, which is not sufficient.

The present invention is made in view of such circumstances and discloses a communication apparatus and a communication method capable of increasing opportunities to ensure TXOP and improving transmission efficiency by implementing a spatial reuse operation inside the same radio system (BSS).

### Solution to Problem

A communication apparatus and a communication method according to the present invention for solving the aforementioned problem are as follows.
(1) That is, a communication apparatus according to an aspect of the present invention is a radio communication apparatus that communicates with a base station apparatus and another radio communication apparatus and includes a receive circuitry that receives a radio frame, a transmit circuitry that transmits a radio frame, and a control circuitry that controls transmission and/or reception of a radio frame. The receive circuitry receives the radio frame, a PHY header of the received radio frame is demodulated, and in a case that first information, included in the PHY header currently being received, to identify a radio system indicates a radio system to which the radio communication apparatus belongs, and in a case that second information included in the PHY header currently being received is specific information, a radio frame is transmitted to fit within NAV of the PHY header currently being received.
(2) Also, in the communication apparatus according to an aspect of the present invention, the second information may be information indicating a sector, and in a case that the second information does not indicate a sector to which the radio communication apparatus belongs, the radio frame may be transmitted.
(3) Also, in the communication apparatus according to an aspect of the present invention, the second information may be information indicating whether communication is directed to the base station apparatus, and in a case that the second information indicates that the communication is directed to the base station apparatus, the radio frame may be transmitted.
(4) Also, in the communication apparatus according to an aspect of the present invention, the second information may be information indicating a radio communication apparatus that is a destination, and in a case that the second information does not indicate a destination of the radio frame that is transmitted, the radio frame may be transmitted.
(5) Also, the communication apparatus according to an aspect of the present invention is the radio communication apparatus in which the second information may be information indicating whether a direct link is used, and in a case that the second information indicates that the direct link is used, the radio frame may be transmitted.
(6) Also, a communication method according to an aspect of the present invention includes the steps of receiving a radio frame, demodulating a PHY header of the received radio frame, and transmitting, in a case that first information, included in a PHY header currently being received, to identify a radio system indicates a radio system to which the radio communication apparatus belongs, and in a case that second information included in the PHY header currently being received is specific information, a radio frame to fit within NAV of the PHY header currently being received.

### Advantageous Effects of Invention

The present invention can contribute to an improvement in communication efficiency in communication using a radio communication apparatus in accordance with the IEEE 802.11 standard.

### Brief Description of Drawings

FIG. 1 is an overview diagram illustrating examples of splitting radio resources according to an aspect of the present invention.
FIG. 2 is a diagram illustrating an example of a frame configuration according to an aspect of the present invention.
FIG. 3 is a diagram illustrating an example of a frame configuration according to an aspect of the present invention.
FIG. 4 is a diagram illustrating an example of communication according to an aspect of the present invention.
FIG. 5 is a diagram illustrating a configuration example of a communication system according to an aspect of the present invention.
FIG. 6 is a block diagram illustrating a configuration example of a radio communication apparatus according to an aspect of the present invention.
FIG. 7 is a block diagram illustrating a configuration example of a radio communication apparatus according to an aspect of the present invention.
FIG. 8 is an overview diagram of radio frame transmission according to an aspect of the present invention.
FIG. 9 is an overview diagram illustrating an example of a frame format according to an aspect of the present invention.
FIG. 10 is an overview diagram of radio frame transmission according to an aspect of the present invention.
FIG. 11 is an overview diagram of sector operation according to an aspect of the present invention.
FIG. 12 is an overview diagram of radio frame transmission according to an aspect of the present invention.

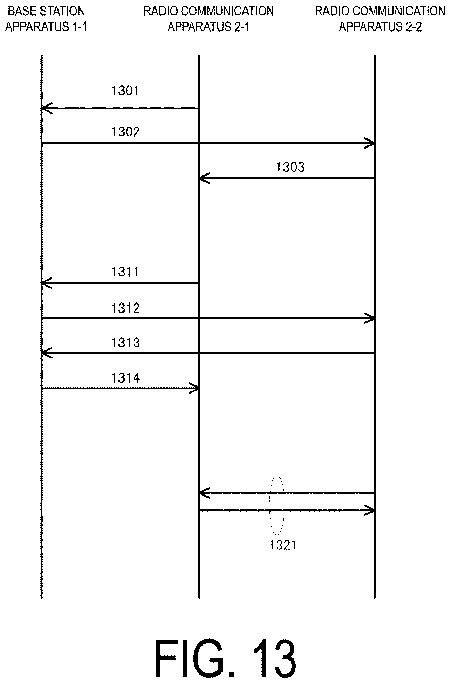

FIG. 13 is a message flow diagram between radio communication apparatuses according to an aspect of the present invention.
FIG. 14 is a timing chart according to an aspect of the present invention.

### Description of Embodiments

A communication system according to the present embodiment includes an access point apparatus (or also referred to as a base station apparatus) and a plurality of station apparatuses (or also referred to as a plurality of terminal apparatuses). Also, the communication system and a network including the access point apparatus and the station apparatuses will be referred to as a Basic service set (BSS: management range or cell). In addition, the station apparatus according to the present embodiment can include function of access point apparatus. Similarly, the access point apparatus according to the present embodiment can include function of the station apparatus (the terminal apparatus and the radio communication apparatus). Therefore, in a case that a communication apparatus is simply mentioned below, the communication apparatus can indicate both the station apparatus and the access point apparatus. Also, the access point apparatus may communicate with other access point apparatus.

The base station apparatus and the terminal apparatus in the BSS are assumed to perform communication based on Carrier sense multiple access with collision avoidance (CSMA/CA). Although an infrastructure mode in which the base station apparatus performs communication with the plurality of terminal apparatuses is targeted in the present embodiment, the method of the present embodiment can also be performed in an ad hoc mode in which the terminal apparatuses perform communication directly with each other. In the ad hoc mode, the terminal apparatus forms the BSS instead of the base station apparatus. The BSS in the ad hoc mode will also be referred to as an Independent Basic Service Set (IBSS).

In the following description, a terminal apparatus that forms the IBSS in the ad hoc mode can also be regarded as a base station apparatus. The method of the present embodiment can also be performed in Peer to Peer (P2P) communication in which the terminal apparatuses perform communication directly with each other. One of methods for performing P2P communication is Tunneled Direct Link Setup (TDLS). In TDLS, traffic flowing between terminal apparatuses associated to the base station apparatus is directly transmitted and/or received between the terminal apparatuses without intervention of the base station apparatus. The method of the present embodiment can also be performed in WiFi Direct (trade name). In WiFi Direct, the terminal apparatus forms a Group instead of the base station apparatus. Hereinafter, a terminal apparatus as a Group owner forming a Group in WiFi Direct can also be regarded as a base station apparatus.

In an IEEE 802.11 system, each apparatus can transmit transmission frames of a plurality of frame types with a common frame format. Each transmission frame is defined by a physical (PHY) layer, a Medium access control (MAC) layer, and Logical Link Control (LLC) layer. The physical layer will also be referred to as a PHY layer, and the medium access control layer will also be referred to as a MAC layer.

A transmission frame of the PHY layer will be referred to as a physical protocol data unit (PPDU: PHY protocol data unit or physical layer frame). The PPDU includes a physical layer header (PHY header) including header information and the like for performing signal processing in the physical layer, a physical service data unit (PSDU: PHY service data unit or MAC layer frame) that is a data unit processed in the physical layer, and the like. The PSDU can include an Aggregated MPDU (A-MPDU) in which a plurality of MAC protocol data units (MPDUs) as a retransmission unit in a radio section are aggregated.

The PHY header includes reference signals such as a Short training field (STF) used for detection, synchronization, and the like of signals, a Long training field (LTF) used for obtaining channel information for demodulating data, and the like and a control signal such as a Signal (SIG) including control information for demodulating data. Also, the STF is classified into a Legacy-STF (L-STF), a High throughput-STF (HT-STF), a Very high throughput-STF (VHT-STF), a High efficiency-STF (HE-STF), an Extremely High Throughput-STF (EHT-STF), and the like in accordance with compatible standards, and the LTF and the SIG are also similarly classified into an L-LTF, an HT-LTF, a VHT-LTF, an HE-LTF, an L-SIG, an HT-SIG, a VHT-SIG, an HE-SIG, and an EHT-SIG. The VHT-SIGis further classified into VHT-SIG-A1, VHT-SIG-A2, and VHT-SIG-B. Similarly, the HE-SIG is classified into HE-SIG-A1 to 4 and HE-SIG-B. On the assumption of updating of technologies in the same standard, a Universal SIGNAL (U-SIG) field including additional control information can be included.

Furthermore, the PHY header can include information for identifying a BSS of a transmission source of the transmission frame (hereinafter, also referred to as BSS identification information). The information for identifying the BSS can be a Service Set Identifier (SSID) of the BSS or a MAC address of a base station apparatus of the BSS. Also, the information for identifying the BSS can be a value unique to the BSS (such as a BSS color, for example) other than the SSID and the MAC address.

The PPDU is modulated in accordance with the compatible standard. In the IEEE 802.11n standard, for example, the PPDU is modulated into an Orthogonal frequency division multiplexing (OFDM) signal.

The MPDU includes a MAC layer header (MAC header) including header information and the like for performing signal processing in the MAC layer, a MAC service data unit (MSDU) that is a data unit processed in the MAC layer or a frame body, and a Frame check sequence (FCS) for checking whether there is an error in the frame. Also, a plurality of MSDUs can be aggregated as an Aggregated MSDU (A-MSDU).

The frame types of transmission frames of the MAC layer are roughly classified into three frame types, namely a management frame for managing an association state and the like between apparatuses, a control frame for managing a communication state between apparatuses, and a data frame including actual transmission data, and each frame type is further classified into a plurality of subframe types. The control frame includes an Acknowledge (Ack) frame, a Request to send (RTS) frame, a Clear to send (CTS) frame, and the like. The management frame includes a Beacon frame, a Probe request frame, a Probe response frame, an Authentication frame, an Association request frame, an Association response frame, and the like. The data frame includes a Data frame, a polling (Cf-poll) frame, and the like. Each apparatus can recognize a frame type and a subframe type of a received frame by reading detail of the frame control field included in a MAC header.

Note that Ack may include Block Ack. Block Ack can perform a reception completion notification to a plurality of MPDUs. Also, Ack may include Multi STA Block Ack (M-BA) including a reception completion notification to a plurality of communication apparatuses.

The beacon frame includes a Field in which an interval at which a beacon is transmitted (Beacon interval) and an SSID are stated. The base station apparatus can periodically notify the BSS of the beacon frame, and each terminal apparatus can recognize the base station apparatus in the surroundings of the terminal apparatus by receiving the beacon frame. The action of the terminal apparatus recognizing the base station apparatus based on the beacon frame broadcast from the base station apparatus will be referred to as Passive scanning. On the other hand, an action of the terminal apparatus searching for the base station apparatus by broadcasting a probe request frame in the BSS will be referred to as Active scanning. The base station apparatus can transmit a probe response frame as a response to the probe request frame, and detail described in the probe response frame is equivalent to that in the beacon frame.

The terminal apparatus recognizes the base station apparatus and performs processing to establish association with the base station apparatus. The association processing is classified into an Authentication procedure and an Association procedure. The terminal apparatus transmits an authentication frame (authentication request) to the base station apparatus with which association is desired. Once the base station apparatus receives the authentication frame, then the base station apparatus transmits, to the terminal apparatus, an authentication frame (authentication response) including a status code indicating whether authentication can be made for the terminal apparatus. The terminal apparatus can determine whether the terminal apparatus has been authenticated by the base station apparatus by reading the status code described in the authentication frame. Note that the base station apparatus and the terminal apparatus can exchange the authentication frame a plurality of times.

After the authentication procedure, the terminal apparatus transmits an association request frame to the base station apparatus in order to perform the association procedure. Once the base station apparatus receives the association request frame, the base station apparatus determines whether to allow the association of the terminal apparatus and transmits an association response frame to provide a notification regarding the determination. In the association response frame, an Association identifier (AID) for identifying the terminal apparatus is described in addition to a status code indicating whether to perform the association processing. The base station apparatus can manage a plurality of terminal apparatuses by configuring different AIDs for the terminal apparatuses for which the base station apparatus has allowed association.

After the association processing is performed, the base station apparatus and the terminal apparatus perform actual data transmission. In the IEEE 802.11 system, a Distributed Coordination Function (DCF), a Point Coordination Function (PCF), and a function in which the DCF and the PCF are enhanced (an Enhanced distributed channel access (EDCA), a Hybrid coordination function (HCF), and the like) are defined. Although a case that the base station apparatus transmits signals to the terminal apparatus using the DCF will be described below as an example, the same also applies to a case that the terminal apparatus transmits signals to the base station apparatus using the DCF.

In the DCF, the base station apparatus and the terminal apparatus perform Carrier sense (CS) for checking a utilization condition of a radio channel in the surroundings of the apparatuses themselves prior to communication. In a case that the base station apparatus that is a transmitting station receives a signal in a level that is higher than a predefined Clear channel assessment level (CCA level) in the radio channel, transmission of the transmission frame through the radio channel is postponed. Hereinafter, a state in which a signal in a level that is equal to or higher than the CCA level is detected in the radio channel will be referred to as a Busy state, and a state in which a signal in a level that is equal to or higher than the CCA level is not detected will be referred to as an Idle state. In this manner, CS performed based on a power (received power level) of a signal actually received by each apparatus will be referred to as physical carrier sense (physical CS). Note that the CCA level will also be referred to as a carrier sense level (CS level) or a CCA threshold (CCAT). Note that in a case that a signal in a level that is equal to or higher than the CCA level is detected, the base station apparatus and the terminal apparatus start to perform an operation of demodulating at least a signal of the PHY layer.

The base station apparatus performs carrier sense corresponding to an inter frame space (IFS) in accordance with the type of transmission frame to be transmitted and determines which of the busy state and the idle state the radio channel is. The period during which the base station apparatus performs carrier sense differs depending on the frame type and the subframe type of transmission frame to be transmitted by the base station apparatus from now on. In the IEEE 802.11 system, a plurality of IFSs with different periods are defined, and there are a short frame interval (Short IFS: SIFS) used for a transmission frame to which the highest priority is given, a polling frame interval (PCF IFS: PIFS) used for a transmission frame with relatively high priority, a distributed control frame interval (DCF IFS: DIFS) used for a transmission frame with the lowest priority, and the like. In a case that the base station apparatus transmits a data frame with the DCF, the base station apparatus uses the DIFS.

The base station apparatus waits for DIFS and then further waits for a random backoff time to prevent frame collision. In the IEEE 802.11 system, a random backoff time called a Contention window (CW) is used. CSMA/CA is based on the assumption that a transmission frame transmitted by a certain transmitting station is received by a receiving station in a state with no interference from other transmitting stations. Therefore, in a case that transmitting stations transmit transmission frames at the same timing, the frames collide against each other, and the receiving station cannot receive them properly. Thus, each transmitting station waits for a randomly configured time before starting the transmission, such that the collision of the frames is avoided. In a case that the base station apparatus determines, through carrier sense, that a radio channel is in an idle state, the base station apparatus starts to count down CW and acquires a transmission right for the first time after CW becomes zero and can transmit the transmission frame to the terminal apparatus. Note that in a case that the base station apparatus determines through the carrier sense that the radio channel is in the busy state during the counting-down of CW, the base station apparatus stops the counting-down of CW. In a case that the radio channel is brought into the idle state, then the base station apparatus restarts the counting-down of the remaining CW after the previous IFS.

Next, details of frame reception will be described. A terminal apparatus that is a receiving station receives a transmission frame, reads a PHY header of the transmission frame, and demodulates the received transmission frame. Then, the terminal apparatus can recognize whether the transmission frame is directed to the terminal apparatus by reading a MAC header of the demodulated signal. Note that the terminal apparatus can also determine the destination of the transmission frame based on information described in the PHY header (for example, a Group identifier (Group ID: GID) listed in the VHT-SIG-A).

In a case that the terminal apparatus determines that the received transmission frame has been directed to the terminal apparatus and has been able to demodulate the transmission frame without any error, the terminal apparatus has to transmit, to the base station apparatus that is the transmitting station, an ACK frame indicating that the frame has been properly received. The ACK frame is one of transmission frames with the highest priority transmitted only after the waiting for the SIFS period (with no random backoff time). The base station apparatus ends the series of communication in response to reception of the ACK frame transmitted from the terminal apparatus. Note that in a case that the terminal apparatus has not been able to receive the frame properly, the terminal apparatus does not transmit ACK. Thus, the base station apparatus ends the communication on the assumption that the communication has been failed in a case that the ACK frame has not been received from the receiving station for a certain period (SIFS + ACK frame length) after the transmission of the frame. In this manner, end of single communication (also called a burst) of the IEEE 802.11 system is always determined based on whether the ACK frame has been received except for special cases such as a case of transmission of a broadcast signal such as a beacon frame and a case that fragmentation for splitting transmission data is used.

In a case that the terminal apparatus determines that the received transmission frame has not been directed to the terminal apparatus, the terminal apparatus configures a Network allocation vector (NAV) based on the Length of the transmission frame described in the PHY header or the like. The terminal apparatus does not attempt communication during a period configured in the NAV. In other words, because the terminal apparatus performs the same operation as in a case that the physical CS determines that the radio channel is in the busy state for a period configured in the NAV, the communication control based on the NAV is also called virtual carrier sense (virtual CS). The NAV is also configured by a Request to send (RTS) frame and a Clear to send (CTS) frame, which are introduced to solve a hidden terminal problem in addition to the case that the NAV is configured based on the information described in the PHY header.

Compared to the DCF in which each apparatus performs carrier sense and autonomously acquires a transmission right, the PCF controls a transmission right of each apparatus inside the BSS using a control station called a Point coordinator (PC). In general, the base station apparatus serves as a PC and acquires a transmission right of the terminal apparatus inside the BSS.

A communication period using the PCF includes a Contention free period (CFP) and a Contention period (CP). During the CP, communication is performed based on the aforementioned DCF, and the PC controls the transmission right during the CFP. The base station apparatus that is a PC broadcasts a beacon frame with description of a CFP period (CFP Max duration) and the like in the BSS prior to a communication with the PCF. Note that the PIFS is used to transmit the beacon frame broadcast at the time of a start of transmission with the PCF, and the beacon frame is transmitted without waiting for CW. The terminal apparatus that has received the beacon frame configures the period of CFP described in the beacon frame to the NAV. Hereinafter, the terminal apparatus can acquire the transmission right only in a case that a signal (a data frame including CF-poll, for example) that performs signalling an acquisition of a transmission right transmitted by the PC is received, until the NAV elapses or a signal (a data frame including CF-end, for example) that broadcasts the end of the CFP in the BSS is received. Note that because no frame collision occurs inside the same BSS during the CFP period, each terminal apparatus does not take a random backoff time used in the DCF.

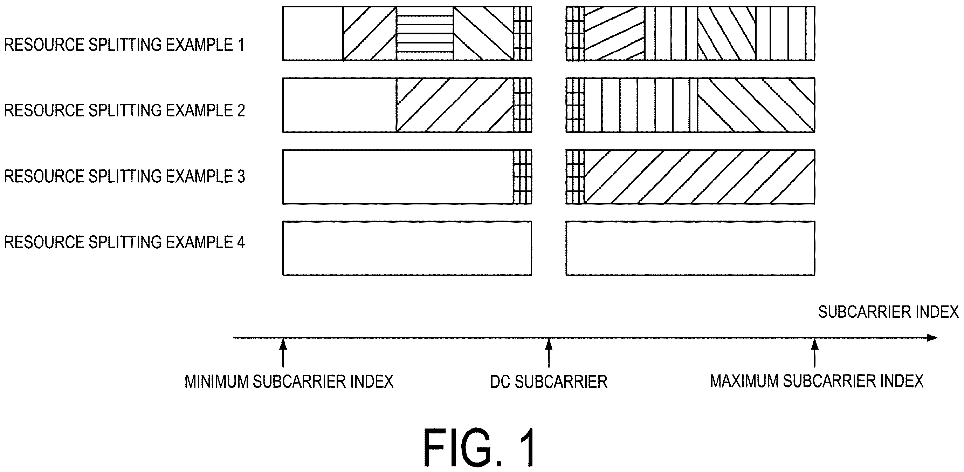

The radio medium can be split into a plurality of Resource units (RUs). FIG. 1 is an overview diagram illustrating an example of a split state of a radio medium. In the resource splitting example 1, for example, the radio communication apparatus can split a frequency resource (subcarrier) that is a radio medium into nine RUs. Similarly, in the resource splitting example 2, the radio communication apparatus can split a subcarrier that is a radio medium into five RUs. It is a matter of course that the resource splitting example illustrated in FIG. 1 is just an example, and for example, each of the plurality of RUs can include a different number of subcarriers. Moreover, the radio medium split into RUs can include not only a frequency resource but also a spatial resource. The radio communication apparatus (an access point apparatus, for example) can transmit frames to a plurality of terminal apparatuses (a plurality of station apparatuses, for example) at the same time by disposing the different frames directed to the terminal apparatuses in the RUs. The access point apparatus can describe information (Resource allocation information) indicating the split state of the radio medium as common control information in the PHY header of the frame transmitted by the access point apparatus. Moreover, the access point apparatus can describe information (resource unit assignment information) indicating an RU where a frame directed to each station apparatus is disposed as unique control information in the PHY header of the frame transmitted by the access point apparatus.

Also, a plurality of terminal apparatuses (a plurality of station apparatuses, for example) can transmit frames at the same time by transmitting the frames disposed in the RUs allocated to themselves, respectively. The plurality of station apparatuses can perform frame transmission after waiting for a predetermined period after receiving the frame (Trigger frame: TF) including trigger information transmitted from the access point apparatus. Each station apparatus can recognize the RU allocated to the station apparatus based on the information described in the TF. Also, each station apparatus can acquire the RU through a random access with reference to the TF.

The access point apparatus can allocate a plurality of RUs to one station apparatus at the same time. The plurality of RUs can include continuous subcarriers or can include noncontinuous subcarriers. The access point apparatus can transmit one frame using a plurality of RUs allocated to one station apparatus or can transmit a plurality of frames with the frames allocated to different RUs. At least one of the plurality of frames can be a frame including common control information for a plurality of terminal apparatuses that transmit Resource allocation information.

One station apparatus can be allocated a plurality of RUs by the access point apparatus. The station apparatus can transmit one frame using the plurality of allocated RUs. Also, the station apparatus can use the plurality of allocated RUs to perform transmission with a plurality of frames allocated to mutually different RUs. The plurality of frames can include frames of mutually different frame types.

The access point apparatus can also allocate a plurality of AIDs to one station apparatus. The access point apparatus can allocate an RU to each of the plurality of AIDs allocated to the one station apparatus. The access point apparatus can transmit mutual different frames using the RUs allocated to the plurality of AIDs allocated to the one station apparatus. The different frames can include frames of mutually different frame types.

The one station apparatus can also be allocated a plurality of AIDs by the access point apparatus. The one station apparatus can be allocated an RU to each of the plurality of AIDs allocated to the one station apparatus. The one station apparatus recognizes each of the RUs allocated to the corresponding one of the plurality of AIDs allocated to the one station apparatus as RUs allocated to the one station apparatus and can transmit one frame using the plurality of allocated RUs. Also, the one station apparatus can transmit a plurality of frames using the plurality of allocated RUs. In this case, the plurality of frames can be transmitted with information indicating AID associated with each of the allocated RUs described therein. The access point apparatus can transmit mutual different frames using the RUs allocated to the plurality of AIDs allocated to the one station apparatus. The different frames can include frames of different frame types.

Hereinafter, the base station apparatus and the terminal apparatuses will be collectively referred to as radio communication apparatuses or communication apparatuses. Also, information exchanged in a case that a certain radio communication apparatus performs communication with another radio communication apparatus will also be referred to as data. In other words, the radio communication apparatus includes the base station apparatus and the terminal apparatuses.

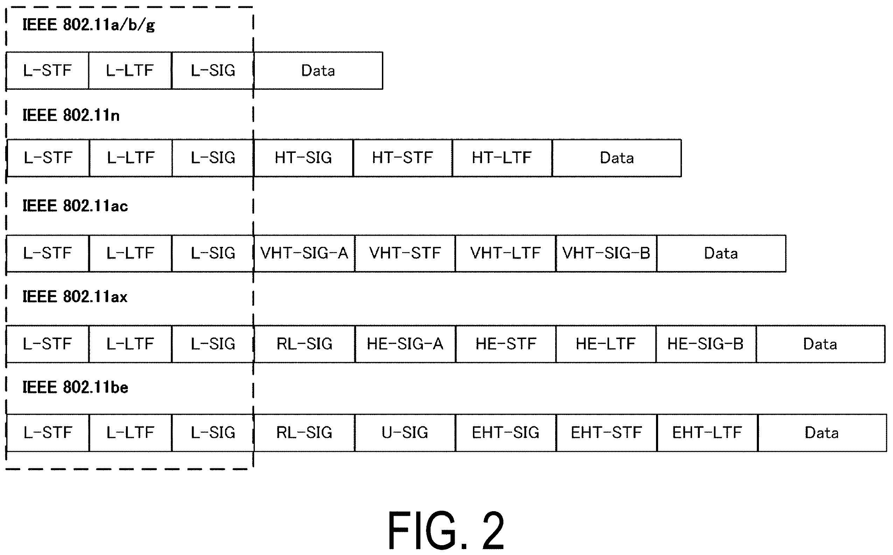

The radio communication apparatus includes any one of or both a function of transmitting a PPDU and a function of receiving a PPDU. FIG. 2 is a diagram illustrating an example of a configuration of the PPDU transmitted by the radio communication apparatus. The PPDU that is compatible with the IEEE 802.11a/b/g standard includes L-STF, L-LTF, L-SIG, and a Data frame (a MAC Frame, a MAC frame, a payload, a data part, data, information bits, and the like). The PPDU that is compatible with the IEEE 802.11n standard includes L-STF, L-LTF, L-SIG, HT-SIG, HT-STF, HT-LTF, and a Data frame. The PPDU that is compatible with the IEEE 802.1 1ac standard includes some or all of L-STF, L-LTF, L-SIG, VHT-SIG-A, VHT-STF, VHT-LTF, VHT-SIG-B, and a MAC frame. The PPDU in the IEEE 802.1 1ax standard includes some or all of L-STF, L-LTF, L-SIG, RL-SIG in which L-SIG is temporally repeated, HE-SIG-A, HE-STF, HE-LTF, HE-SIG-B, and a Data frame. The PPDU studied in the IEEE 802.1 1be standard includes some or all of L-STF, L-LTF, L-SIG, RL-SIG, U-SIG, EHT-SIG, EHT-STF, EHT-LTF, and a Data frame.

L-STF, L-LTF, and L-SIG surrounded by the dotted line in FIG. 2 are configurations commonly used in the IEEE 802.11 standard (hereinafter, L-STF, L-LTF, and L-SIG will also be collectively referred to as an L-header). For example, a radio communication apparatus that is compatible with the IEEE 802.11a/b/g standard can appropriately receive an L-header inside a PPDU that is compatible with the IEEE 802.11n/ac standard. The radio communication apparatus that is compatible with the IEEE 802 11a/b/g standard can receive the PPDU that is compatible with the IEEE 802 11n/ac standard while regarding it as a PPDU that is compatible with the IEEE 802.11a/b/g standard.

However, because the radio communication apparatus that is compatible with the IEEE 802.11a/b/g standard cannot demodulate the PPDU that is compatible with the IEEE 802.11n/ac standard following the L-header, it is not possible to demodulate information related to a Transmitter Address (TA), a Receiver Address (RA), and a Duration/ID field used for configuring the NAV.

As a method for the radio communication apparatus that is compatible with the IEEE 802.11a/b/g standard to appropriately configure the NAV (or perform a receiving operation for a predetermined period), IEEE 802.11 defines a method of inserting Duration information to the L-SIG. Information related to a transmission speed in the L-SIG (a RATE field, an L-RATE field, an L-RATE, an L_DATARATE, and an L_DATARATE field), information related to a transmission period (a LENGTH field, an L-LENGTH field, and an L-LENGTH) are used by the radio communication apparatus that is compatible with the IEEE 802.11a/b/g standard to appropriately configure NAV.

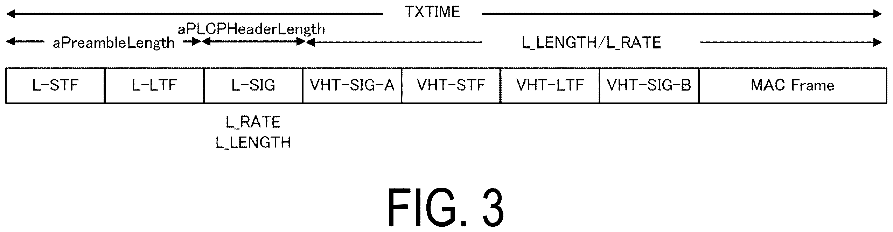

FIG. 3 is a diagram illustrating an example of a method of Duration information inserted into L-SIG. Although a PPDU configuration that is compatible with the IEEE 802.11ac standard is illustrated as an example in FIG. 3, the PPDU configuration is not limited thereto. A PPDU configuration that is compatible with the IEEE 802.11n standard and a PPDU configuration that is compatible with the IEEE 802.11ax standard may be employed. TXTIME includes information related to the length of the PPDU, aPreambleLength includes information related to the length of a preamble (L-STF + L-LTF), and aPLCPHeaderLength includes information related to the length of a PLCP header (L-SIG). L_LENGTH is calculated based on Signal Extension that is a virtual period configured for compatibility with the IEEE 802.11 standard, Nₒₚₛ related to L_RATE, aSymbolLength that is information related to one symbol (a symbol, an OFDM symbol, or the like), aPLCPServiceLength indicating the number of bits included in PLCP Service field, and aPLCPConvolutionalTailLength indicating the number of tail bits of a convolution code. The radio communication apparatus can calculate L_LENGTH and insert L_LENGTH into L-SIG. Also, the radio communication apparatus can calculate L-SIG Duration. L-SIG Duration indicates information related to a PPDU including L_LENGTH and information related to a period that is the sum of periods of Ack and SIFS expected to be transmitted by the destination radio communication apparatus in response to the PPDU.

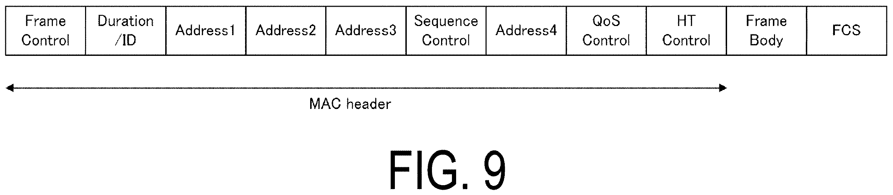

FIG. 9 illustrates an example of a MAC Frame format. The MAC Frame described herein indicates a Data frame in FIG. 2 (a MAC Frame, a MAC frame, a payload, a data unit, data, an information bit, and the like) and a MAC Frame in FIG. 3. The MAC Frame includes a Frame Control, a Duration/ID, an Address 1, an Address 2, an Address 3, a Sequence Control, an Address 4, a QoS Control, an HT Control, a Frame Body, and an FCS.

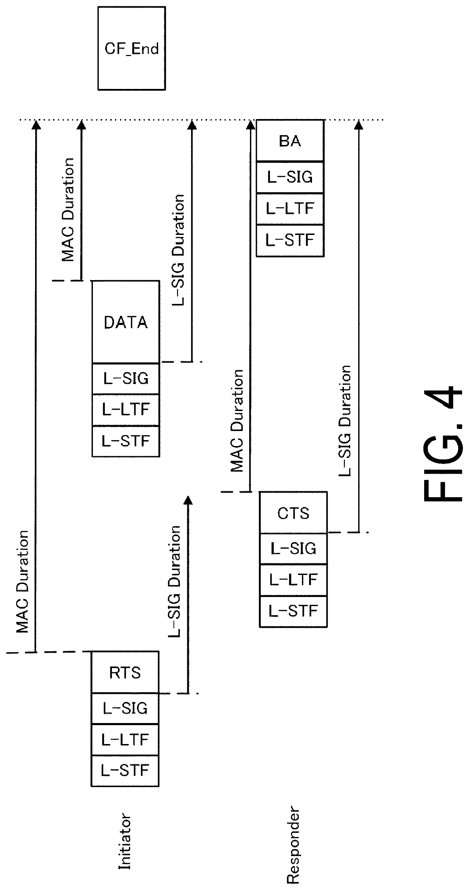

FIG. 4 is a diagram illustrating an example of L-SIG Duration in L-SIG TXOP Protection. DATA (a frame, a payload, data, and the like) include a part of or both the MAC frame and the PLCP header. Also, BA includes Block Ack or Ack. The PPDU includes L-STF, L-LTF, and L-SIG and can further include any one or more of DATA, BA, RTS, and CTS. Although L-SIG TXOP Protection using RTS/CTS is illustrated in the example illustrated in FIG. 4, CTS-to-Self may be used. Here, MAC Duration is a period indicated by a value of Duration/ID field. Also, Initiator can transmit a CF End frame for providing a notification regarding an end of the L-SIG TXOP Protection period.

Next, a method of identifying a BSS from a frame received by a radio communication apparatus will be described. In order for the radio communication apparatus to identify the BSS from the received frame, the radio communication apparatus that transmits a PPDU preferably inserts information (BSS color, BSS identification information, a value unique to the BSS) for identifying the BSS into the PPDU, and it is possible to describe information indicating BSS color in HE-SIG-A.

The radio communication apparatus can transmit L-SIG a plurality of times (L-SIG Repetition). For example, demodulation accuracy of L-SIG is improved by the radio communication apparatus on the reception end receiving L-SIG transmitted a plurality of times by using Maximum Ratio Combining (MRC). Moreover, in a case that reception of L-SIG has properly been completed using MRC, the radio communication apparatus can interpret the PPDU including the L-SIG as a PPDU that is compatible with the IEEE 802.11ax standard.

Even during the operation of receiving the PPDU, the radio communication apparatus can perform an operation of receiving a part of a PPDU other than the PPDU (such as a preamble, L-STF, L-LTF, and a PLCP header defined by IEEE 802.11, for example) (also referred to as a double-reception operation). In a case that a part of a PPDU other than the PPDU is detected during the operation of receiving the PPDU, the radio communication apparatus can update a part or an entirety of information related to a destination address, a source address, the PPDU, or a DATA period.

Ack and BA can also be referred to as a response (response frame). Also, a probe response, an authentication response, and an association response can also be referred to as a response.

### 1. First Embodiment

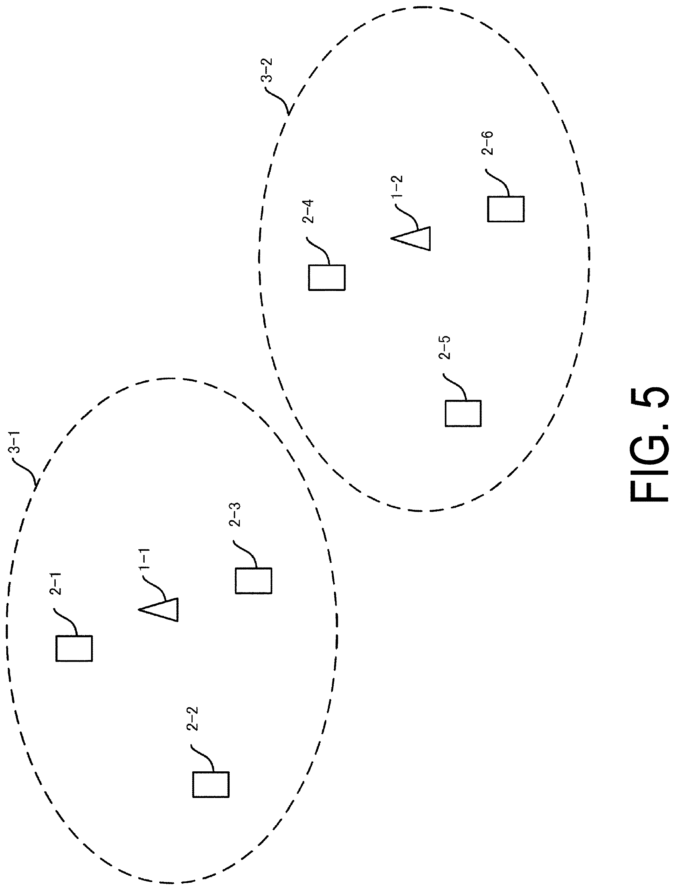

FIG. 5 is a diagram illustrating an example of a radio communication system according to the present embodiment. A radio communication system 3-1 includes a radio communication apparatus 1-1 and radio communication apparatuses 2-1 to 2-3. Note that the radio communication apparatus 1-1 will also be referred to as a base station apparatus 1-1, and the radio communication apparatuses 2-1 to 2-3 will also be referred to as terminal apparatuses 2-1 to 2-3. In addition, the radio communication apparatuses 2-1 to 2-3 and the terminal apparatuses 2-1 to 2-3 will also be referred to as a radio communication apparatus 2A and a terminal apparatus 2A, respectively, as apparatuses associated to the radio communication apparatus 1-1. The radio communication apparatus 1-1 and the radio communication apparatus 2A are wirelessly associated and are in a state in which they can transmit and/or receive PPDUs to and from each other. Also, the radio communication system according to the present embodiment may include a radio communication system 3-2 in addition to the radio communication system 3-1. The radio communication system 3-2 includes a radio communication apparatus 1-2 and radio communication apparatuses 2-4 to 2-6. Note that the radio communication apparatus 1-2 will also be referred to as a base station apparatus 1-2 and the radio communication apparatuses 2-4 to 2-6 will also be referred to as terminal apparatuses 2-4 to 2-6. Also, the radio communication apparatuses 2-4 to 2-6 and the terminal apparatuses 2-4 to 2-6 will also be referred to as a radio communication apparatus 2B and a terminal apparatus 2B, respectively, as apparatuses associated to the radio communication apparatus 1-2. Although the radio communication system 3-1 and the radio communication system 3-2 form different BSSs, this does not necessarily mean that Extended Service Sets (ESSs) are different. The ESSs indicate service sets forming a Local Area Network (LAN). In other words, radio communication apparatuses belonging to the same ESS can be regarded as belonging to the same network from a higher layer. Also, the BSSs are coupled via a Distribution System (DS) and form an ESS. Note that each of the radio communication systems 3-1 and 3-2 can further include a plurality of radio communication apparatuses.

In FIG. 5, it is assumed that signals transmitted by the radio communication apparatus 2A reach the radio communication apparatus 1-1 and the radio communication apparatus 2B while the signals do not reach the radio communication apparatus 1-2 in the following description. In other words, in a case that the radio communication apparatus 2A transmits a signal using a certain channel, the radio communication apparatus 1-1 and the radio communication apparatus 2B determine that the channel is in the busy state while the radio communication apparatus 1-2 determines that the channel is in an idle state. Also, it is assumed that signals transmitted by the radio communication apparatus 2B reach the radio communication apparatus 1-2 and the radio communication apparatus 2A while the signals do not reach the radio communication apparatus 1-1. In other words, in a case that the radio communication apparatus 2B transmits a signal using a certain channel, the radio communication apparatus 1-2 and the radio communication apparatus 2A determine that the channel is in the busy state while the radio communication apparatus 1-1 determines that the channel is in the idle state.

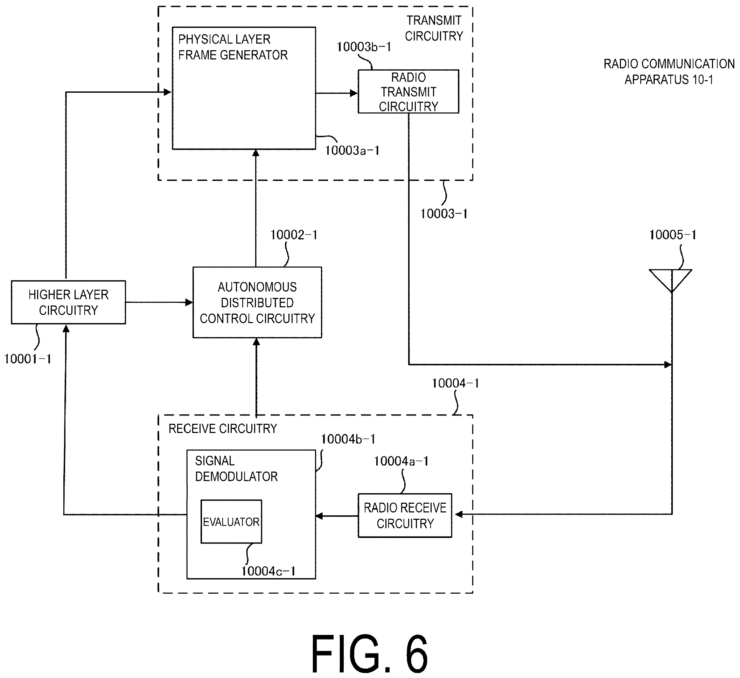

FIG. 6 is a diagram illustrating an example of an apparatus configuration of radio communication apparatuses 1-1, 1-2, 2A, and 2B (hereinafter, collectively referred to as a radio communication apparatus 10-1 or a station apparatus 10-1 or also simply referred to as a station apparatus). The radio communication apparatus 10-1 includes a higher layer circuitry (higher layer processing step) 10001-1, an autonomous distributed control circuitry (autonomous distributed control step) 10002-1, a transmit circuitry (transmission step) 10003-1, a receive circuitry (reception step) 10004-1, and an antenna 10005-1.

The higher layer circuitry 10001-1 performs information processing for layers higher than the physical layer, for example, the MAC layer and the LLC layer in regard to information (information related to a transmission frame, a Management Information Base (MIB), and the like) handled in the radio communication apparatus and a frame received from another radio communication apparatus.

The higher layer circuitry 10001-1 can notify the autonomous distributed control circuitry 10002-1 of information related to a frame and a traffic transmitted to a radio medium. The information related to a frame and a traffic may be control information included in a management frame such as a beacon, for example, or may be measurement information reported by another radio communication apparatus to the radio communication apparatus. Moreover, the information may be control information included in a management frame or a control frame with the destination not limited (the information may be directed to the apparatus, may be directed to another apparatus, may be broadcasting, or may be multicasting).

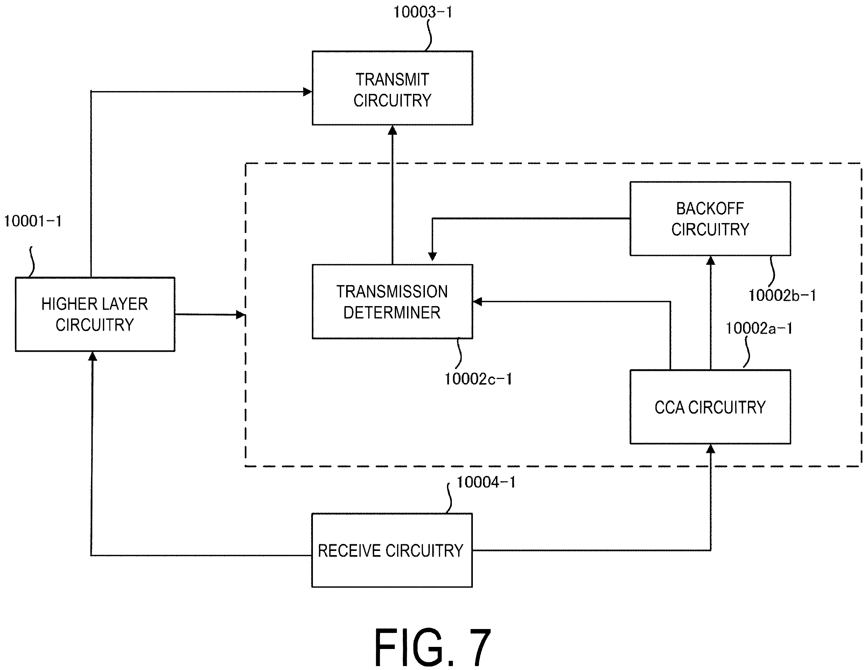

FIG. 7 is a diagram illustrating an example of an apparatus configuration of the autonomous distributed control circuitry 10002-1. The autonomous distributed control circuitry 10002-1 will also be referred to as a control circuitry 10002-1 and includes a CCA circuitry (CCA step) 10002a-1, a backoff circuitry (backoff step) 10002b-1, and a transmission determiner (transmission determination step) 10002c-1.

The CCA circuitry 10002a-1 can perform determination of a state of a radio resource (including determination between a busy state and an idle state) using any one of or both information related to received signal power received via the radio resource and information related to the received signal (including information after decoding) provided as a notification from the receive circuitry 10004-1. The CCA circuitry 10002a-1 can notify the backoff circuitry 10002b-1 and the transmission determiner 10002c-1 of the state determination information of the radio resource.

The backoff circuitry 10002b-1 can perform backoff using the state determination information of the radio resource. The backoff circuitry 10002b-1 generates CW and includes a counting-down function. For example, it is possible to perform counting-down of CW in a case that the state determination information of the radio resource indicates an idle state, for example, and it is possible to stop the counting-down of CW in a case that the state determination information of the radio resource indicates a busy state. The backoff circuitry 10002b-1 can notify the transmission determiner 10002c-1 of the value of CW.

The transmission determiner 10002c-1 performs transmission determination using any one of or both the state determination information of the radio resource and the value of CW. For example, it is possible to notify the transmit circuitry 10003-1 of transmission determination information in a case that the state determination information of the radio resource indicates idle and the value of CW is zero. Also, it is possible to notify the transmit circuitry 10003-1 of the transmission determination information in a case that the state determination information of the radio resource indicates idle.

The transmit circuitry 10003-1 includes a physical layer frame generator (physical layer frame generation step) 10003a-1 and a radio transmit circuitry (radio transmission step) 10003b-1. Note that the physical layer frame generator (physical layer frame generation step) may be referred to as a frame generator (frame generation step). The physical layer frame generator 10003a-1 includes a function of generating a physical layer frame (hereinafter, also referred to as a frame or a PPDU) based on the transmission determination information provided as a notification from the transmission determiner 10002c-1. The physical layer frame generator 10003a-1 includes a coder that performs error correction coding processing on data received from the higher layer and generates a coding block. Also, the physical layer frame generator 10003a-1 also includes a function of performing modulation, precoding filter multiplication, and the like. The physical layer frame generator 10003a-1 sends the generated physical layer frame to the radio transmit circuitry 10003b-1.

Also, the frame generated by the physical layer frame generator 10003a-1 includes a trigger frame for providing an indication for transmitting the frame to the radio communication apparatus that is a destination terminal. The trigger frame includes information indicating the RU used in a case that the radio communication apparatus that has received the indication for transmitting the frame transmits the frame.

The radio transmit circuitry 10003b-1 converts the physical layer frame generated by the physical layer frame generator 10003a-1 into a signal in a Radio Frequency (RF) band to generate a radio frequency signal. Processing performed by the radio transmit circuitry 10003b-1 includes digital-to-analog conversion, filtering, frequency conversion from a baseband to an RF band, and the like.

The receive circuitry 10004-1 includes a radio receive circuitry (radio receiving step) 10004a-1 and a signal demodulator (signal demodulation step) 10004b-1. The receive circuitry 10004-1 generates information related to received signal power from the signal in the RF band received by the antenna 10005-1. The receive circuitry 10004-1 can notify the CCA circuitry 10002a-1 of the information related to the received signal power and the information related to the received signal.

The radio receive circuitry 10004a-1 includes a function of converting the signal in the RF band received by the antenna 10005-1 into a baseband signal and generating a physical layer signal (for example, a physical layer frame). Processing performed by the radio receive circuitry 10004a-1 includes frequency conversion processing from the RF band to the baseband, filtering, and analog-to-digital conversion.

The signal demodulator 10004b-1 has a function of demodulating the physical layer signal generated by the radio receive circuitry 10004a-1. Processing performed by the signal demodulator 10004b-1 includes channel equalization, demapping, error correction decoding, and the like. The signal demodulator 10004b-1 can extract, from the physical layer signal, information included in the PHY header, information included in the MAC header, and information included in the transmission frame, for example. The signal demodulator 10004b-1 can notify the higher layer circuitry 10001-1 of the extracted information. Note that the signal demodulator 10004b-1 can extract any one or all of information included in the PHY header, information included in the MAC header, and information included in the transmission frame. An evaluator (evaluation step) 10004c-1 performs predetermined operation on the thus extracted information included in the PHY header, the MAC header and the like and notifies the higher layer circuitry of detail in accordance with the evaluation.

The antenna 10005-1 includes a function of transmitting the radio frequency signal generated by the radio transmit circuitry 10003b-1 to a radio space. Also, the antenna 10005-1 includes a function of receiving the radio frequency signal and passing the radio frequency signal to the radio receive circuitry 10004a-1.

The radio communication apparatus 10-1 can cause radio communication apparatuses in the surroundings of the radio communication apparatus to configure NAV corresponding to a period during which the radio communication apparatus uses a radio medium by describing information indicating the period in the PHY header or the MAC header of the frame to be transmitted. For example, the radio communication apparatus 10-1 can describe the information indicating the period in a Duration/ID field or a Length field in the frame to be transmitted. The NAV period configured to radio communication apparatuses in the surroundings of the radio communication apparatus will be referred to as a TXOP period (or simply TXOP) acquired by the radio communication apparatus 10-1. Also, the radio communication apparatus 10-1 that has acquired the TXOP will be referred to as a TXOP holder. The frame type of frame to be transmitted by the radio communication apparatus 10-1 to acquire TXOP is not limited to any frame type, and the frame may be a control frame (for example, an RTS frame or a CTS-to-self frame) or may be a data frame.

The radio communication apparatus 10-1 that is a TXOP holder can transmit the frame to radio communication apparatuses other than the radio communication apparatus during the TXOP. In a case that the radio communication apparatus 1-1 is a TXOP holder, the radio communication apparatus 1-1 can transmit a frame to the radio communication apparatus 2A during the TXOP period. Also, the radio communication apparatus 1-1 can provide an indication for transmitting a frame directed to the radio communication apparatus 1-1 to the radio communication apparatus 2A during the TXOP period. The radio communication apparatus 1-1 can transmit, to the radio communication apparatus 2A, a trigger frame including information for providing an indication for transmitting a frame directed to the radio communication apparatus 1-1 during the TXOP period.

The radio communication apparatus 1-1 may ensure TXOP for the entire communication band (an Operation bandwidth, for example) that may be used for frame transmission or may ensure a specific communication Band such as a communication band actually used to transmit the frame (a Transmission bandwidth, for example).

The radio communication apparatus that provides an indication for transmitting a frame in the TXOP period acquired by the radio communication apparatus 1-1 is not necessarily limited to radio communication apparatuses associated to the radio communication apparatus. For example, the radio communication apparatus can provide an indication for transmitting frames to radio communication apparatuses that are not associated to the radio communication apparatus in order to cause the radio communication apparatuses in the surroundings of the radio communication apparatus to transmit management frames such as a Reassociation frame or control frames such as an RTS/CTS frame.

Furthermore, TXOP in EDCA that is a data transmission method different from DCF will also be described. The IEEE 802.11e standard relates to EDCA and defines TXOP in terms of guaranty of Quality of Service (QoS) for various services such as video transmission and VoIP. The services are roughly categorized int four access categories, namely VOice (VO), VIdeo (VI), Best Effort (BE), and BacK ground (BK). In general, the services include VO, VI, BE, and BK with higher priority in this order. In each access category, there are parameters including a minimum value CWmin of CW, a maximum value CWmax of CW, Arbitration IFS (AIFS) as a type of IFS, and TXOP limit that is an upper limit value of a transmission opportunity, and values are set to have differences in priority. For example, it is possible to perform data transmission prioritized over the other access categories by setting a relatively small value for CWmin, CWmax, and AIFS of VO with the highest priority for the purpose of voice transmission as compared with the other access categories. For example, in a case of VI with a relatively large amount of transmission data to transmit a video, it is possible to extend a transmission opportunity as compared with the other access categories by configuring TXOP limit to be large. In this manner, four parameter values of the access categories are adjusted for the purpose of guaranteeing QoS in accordance with various services.

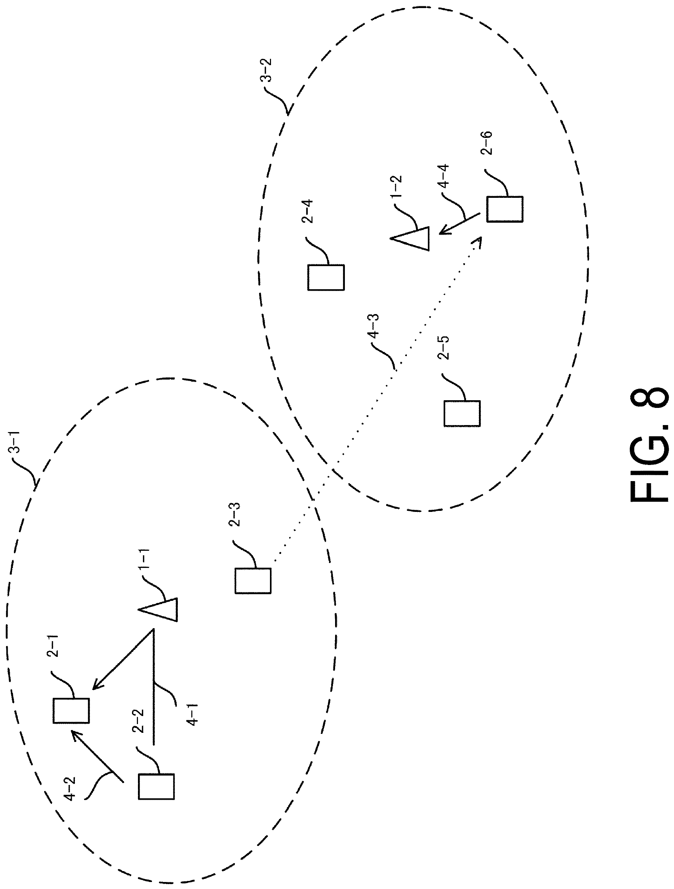

Next, an example of implementation of a direct link will be described using FIG. 8. Among the numerals used in FIG. 8, the same numerals as those in FIG. 5 are the same as those described in FIG. 5. A radio system 3-1 includes a base station apparatus 1-1, a radio communication apparatus 2-1 (terminal apparatus 2-1), a radio communication apparatus 2-2 (terminal apparatus 2-2), and a radio communication apparatus 2-3 (terminal apparatus 2-3). In a case that the radio communication apparatus 2-2 transmits data directed to the radio communication apparatus 2-1, communication (4-1) via the base station apparatus 1-1 and direct communication (4-2) from the radio communication apparatus 2-2 to the radio communication apparatus 2-1 without going through the base station apparatus 1-1 are defined as a direct link. In a case that a direct link is used, the radio communication apparatus 2-1 transmits a direct link discovery request to the radio communication apparatus 2-2 via the base station apparatus 1-1. The radio communication apparatus 2-2 that has received the direct link discovery request via the base station apparatus 1-1 transmits a direct link discovery response to the radio communication apparatus 2-1 using a direct path. It is ascertained that direct communication can be performed between the radio communication apparatus 2-1 and the radio communication apparatus 2-2 by the radio communication apparatus 2-1 successfully receiving the direct link discovery response.

Thereafter, the radio communication apparatus 2-1 transmits a direct link setup request to the radio communication apparatus 2-2 via the base station apparatus 1-1. The radio communication apparatus 2-1 that transmits the direct link setup request may also be referred to as an initiator. The radio communication apparatus 2-2 that has received the direct link setup request transmits a direct setup response to the radio communication apparatus 2-1 via the base station apparatus 1-1. The radio communication apparatus 2-2 that transmits the direct setup response may also be referred to as a responder. After the direct link setup request and the direct link setup response are successfully exchanged, the direct link is determined to have been established, and the radio communication apparatus 2-1 and the radio communication apparatus 2-2 can perform direct communication without going through the base station apparatus 1-1 at the time of performing communication with each other. The direct link setup request and the direct link setup response may include various kinds of control information, for example, control information such as information used for encrypted communication, for example, information regarding a key. In a case that information used for encrypted communication is exchanged along with the exchange of the direct link setup request and the direct link setup response, an encryption may be used in the direct link.

Next, inter-BSS spatial reuse operation will be described using FIG. 8. In a case that an interference signal is added to a desired signal in radio communication, it is possible to demodulate and decode the desired signal in a case that a ratio between a power of the interference signal and noise and a power of the desired signal is equal to or greater than a predetermined value. According to this, this means that it is possible to perform communication performed in a distant location and communication between a plurality of radio communication apparatuses at relatively short distances in the same time as communication is performed to the distant location, that is, in a case that there is a sufficient distance from the radio communication apparatus at the distant location. A transmission operation based on overlapping utilization of a radio medium using a path loss caused depending on placement conditions in this manner is defined as a Spatial Reuse operation. Hereinafter, the Spatial Reuse operation may be simply abbreviated as SR.

In one example, a case that the radio communication apparatus 2-6 in the radio system 3-2 performs transmission by SR against the signal transmitted by the radio communication apparatus 2-3 to the base station apparatus 1-1 in the radio system 3-1 will be described. In this case, whether transmission by SR is performed without any problem depends on how much a Signal to Interference Noise Ratio (SINR) of the signal of the radio communication apparatus 2-3 received by the base station apparatus 1-1 is degraded due to the transmission performed by the radio communication apparatus 2-6. In a case that the path loss from the radio communication apparatus 2-6 to the base station apparatus 1-1 is sufficiently large and the transmit power of the radio communication apparatus 2-6 is sufficiently low, the degradation of the SINR of the signal of the radio communication apparatus 2-3 received by the base station apparatus 1-1 is accepted. Although various methods can be used as a method for assuring the path loss from the radio communication apparatus 2-6 to the base station apparatus 1-1, there is inter-BSS SR, as an example, in which SR is performed on the assumption that a sufficient path loss is assured in a case that radio systems (BSSs) to which radio communication apparatuses belong differ from each other. Once the radio communication apparatus 2-6 in the radio system 3-2 receives a signal 4-3 transmitted by the radio communication apparatus 2-3 in the radio system 3-1, then the radio communication apparatus 2-6 reads the PHY header of the radio frame of the signal 4-3 and determines which of the radio systems the signal 4-3 has been transmitted from. At this time, information obtained by shortening an identifier that indicates the radio system, which is called BSScolor, included in the PHY header may be used to identify the signal as a signal of the radio frame transmitted from a radio system that is different from the radio system 3-2.

After it is possible to identify that the signal 4-3 is a signal of the radio frame having arrived from another radio system, the radio communication apparatus 2-6 may read a Network Allocation Vector (NAV) indicating a transmission time of the signal 4-3 from the PHY header of the signal 4-3, may prepare transmission data (radio frame) such that the transmission ends before the time indicated by NAV, and may transmit the transmission data to the base station apparatus 1-2 (4-4). At the time of the transmission, the radio communication apparatus 2-6 may control the transmit power to reduce an interference against the base station apparatus and the radio communication apparatuses included in the radio system 3-1. Information used for the transmit power may be received from the base station apparatus 1-2. Also, the radio communication apparatus 2-6 may perform the transmit power control using received power in a case that various LTFs included in a preamble of the signal 4-3 are received. Also, received power in a case that various LTFs included in the preamble of the signal 4-3 are received may be used as representative received power of the signal 4-3.

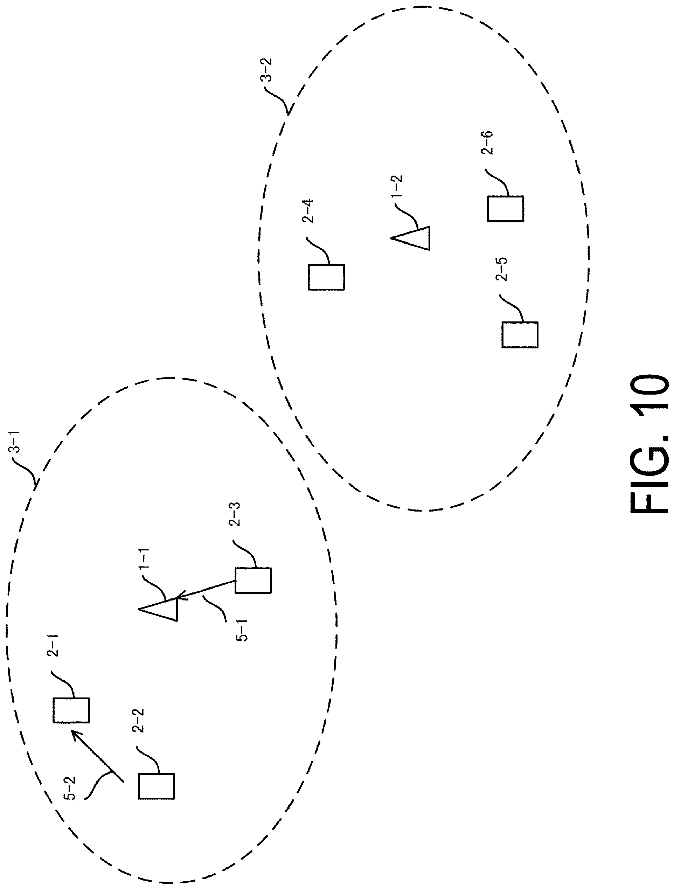

In the present embodiment, communication in the same radio system is used as a target on which SR is performed (intra-BSS SR operation). An example of a case that a direct link is used for performing SR will be described using FIG. 10. Among the numerals used in FIG. 10, the same numerals as those in FIG. 5 are the same as those described in FIG. 5. A radio system 3-1 includes abase station apparatus 1-1 and radio communication apparatuses 2-1 to 2-3. It is assumed that a configuration of a direct link between the radio communication apparatus 2-1 and the radio communication apparatus 2-2 has been completed. The radio communication apparatus 2-3 performs transmission to the base station apparatus 1-1 (5-1). Although the radio communication apparatus 2-2 has data to be transmitted to the radio communication apparatus 2-1, in other words, data that can be transmitted using a direct link, the radio communication apparatus 2-2 stops the transmission once in a case that the radio communication apparatus 2-2 detects a signal (5-1) through carrier sense. After the signal (5-1) is detected, the radio communication apparatus 2-2 receives a PHY header of the signal (5-1). NAV (duration information) indicating the length of the signal (5-1) is obtained from the PHY header. Thereafter, the radio communication apparatus 2-2 configures the length of the transmission data (the length of the radio frame) such that it does not exceed the NAV indicating the length of the signal (5-1) (the length of the radio frame) and transmits the data (radio frame) to the radio communication apparatus 2-1 in an overlapping manner on the signal (5-1) after configuration of transmit power (5-2).

Also, information indicating communication is in the uplink direction included in the PHY header may be confirmed as a condition of the transmission (5-2) of the data (radio frame), and the fact that the information indicating the communication is in the uplink direction indicates the uplink direction may be included. In a case that the fact that the communication is in the uplink direction is indicated, this indicates that the radio frame has been transmitted to the base station apparatus.

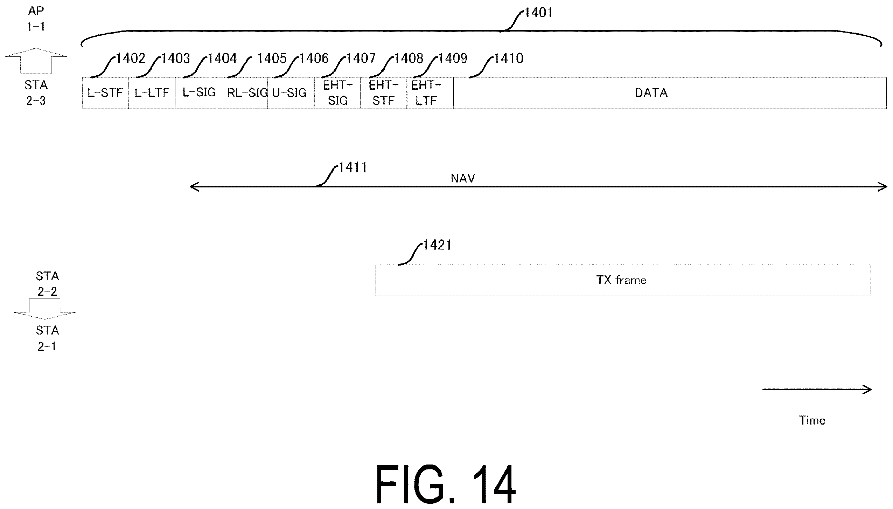

An example of the aforementioned operations will be described using FIG. 14. 1401 denotes a radio frame transmitted by the radio communication apparatus 2-3 to the base station apparatus 1-1, 1402 denotes L-STF, 1403 denotes L-LTF, 1404 denotes L-SIG, 1405 denotes RL-SIG, 1406 denotes U-SIG, 1407 denotes EHT-SIG, 1408 denotes EHT-STF, 1409 denotes EHT-LTF, and 1410 denotes a data field. L-SIG (1404) includes a period until the transmission of the radio frame (1401) ends, that is information (duration information) indicating the NAV (1411). The information indicating the NAV may be included in U-SIG (1406) or EHT-SIG (1407) instead of L-SIG (1404). The radio communication apparatus 2-2 that has detected the transmitted radio frame (1401) stops the transmission to the radio communication apparatus 2-1 once and starts reception of the radio frame (1401). The radio communication apparatus 2-2 that has received the radio frame (1401) demodulates the PHY header of the radio frame (1401). Although it is assumed that at least one or more fields of L-SIG (1404), RL-SIG (1405), U-SIG (1406), or EHT-SIG (1407) correspond to the PHY header, and all the fields are demodulated in the present embodiment, in a case that a radio frame does not include any of the fields, another field may be demodulated. The radio communication apparatus 2-2 obtains the information indicating the NAV (1411) from the demodulated L-SIG (1404), configures the length of the radio frame (1421) transmitted by the radio communication apparatus 2-2 such that it fits within the NAV (1411), and transmits the radio frame (1421) to the radio communication apparatus 2-1. Information indicating the communication is in the uplink direction may be included in U-SIG (1406) or EHT-SIG (1407), and in a case that the information indicating the communication is in the uplink direction is confirmed, U-SIG (1406) or EHT-SIG (1407) is demodulated. Thereafter, the fact that the information indicating the communication is in the uplink direction indicates the uplink direction may be confirmed, and the radio frame (1421) may be transmitted to the radio communication apparatus 2-1.

The transmit power for the transmission (5-2) to the radio communication apparatus 2-1 is controlled to have a level in which the base station apparatus 1-1 is not prevented from receiving the communication (5-1) from the radio communication apparatus 2-3. Information used for controlling the power may be broadcast by being included in a beacon from the base station apparatus 1-1 or may be included in a trigger frame transmitted by the base station apparatus 1-1. Moreover, the base station apparatus 1-1 may notify the radio communication apparatus 2-2 of the information when the radio communication apparatus 2-2 performs direct link setup. Also, information used for controlling the power used in intra-BSS SR may be configured as separate information from the information used for controlling the power used in inter-BSS SR. Moreover, in a case that the information for controlling the power used in intra-BSS SR has not been defined, information used for controlling the power used in inter-BSS SR may be used as information for controlling the power used in intra-BSS SR.

The configuration of the transmit power transmitted by the radio communication apparatus 2-2 to the radio communication apparatus 2-1 (5-2) as intra-BSS SR may be determined based on the information for controlling the power used in intra-BSS SR and a path loss between the radio communication apparatus 2-2 and the radio communication apparatus 2-1. A path loss between the radio communication apparatus 2-2 and the radio communication apparatus 2-1 may be measured from the received power in a case that a reference signal transmitted by the radio communication apparatus 2-2 or the radio communication apparatus 2-1 is received by exchanging the information regarding the transmit power of each of the radio communication apparatus 2-2 and the radio communication apparatus 2-1 in a case that the radio communication apparatus 2-2 and the radio communication apparatus 2-1 communicate with each other, such as direct link discovery, direct link setup, or the like. As an example, the transmit power of the radio communication apparatus 2-2 for intra-BSS SR is configured to satisfy the following expression. (transmit power) + (path loss between the radio communication apparatus 2-2 and the radio communication apparatus 2-1) < (information for controlling power used in intra-BSS SR)

### (Expression 1)

At this time, in a case that the value of received power = (transmit power) - (path loss between the radio communication apparatus 2-2 and the radio communication apparatus 2-1) assumed by the radio communication apparatus 2-1 is below a value necessary to demodulate the signal transmitted by the radio communication apparatus 2-2, the radio communication apparatus 2-2 may stop the transmission by intra-BSS SR. Also, the radio communication apparatus 2-2 may stop the transmission by intra-BSS SR in a case that the transmit power that is configurable by (Expression 1) is 0 or a negative value.

Also, a value indicating a path loss between the radio communication apparatus 2-2 and the base station apparatus 1 may also be taken into consideration in a case that the transmit power of the transmission (5-2) by the radio communication apparatus 2-2 to the radio communication apparatus 2-1 as intra-BSS SR is configured. The path loss between the radio communication apparatus 2-2 and the base station apparatus 1-1 may be measured from the received power in a case that a reference signal (various LTFs) transmitted by the radio communication apparatus 2-2 or the base station apparatus 1-1 is received by exchanging the information regarding the transmit power of each of the radio communication apparatus 2-2 and the base station apparatus 1-1 in a case that the radio communication apparatus 2-2 and the base station apparatus 1-1 communicate with each other, such as direct link discovery, direct link setup, or the like. As an example, the transmit power of the radio communication apparatus 2-2 for intra-BSS SR is configured to satisfy the following expression. (transmit power) - (path loss between the radio communication apparatus 2-2 and the base station apparatus 1-1) < (information for controlling power used in intra-BSS SR) (Expression 2)

At this time, in a case that the value of received power = (transmit power) - (path loss between the radio communication apparatus 2-2 and the radio communication apparatus 2-1) assumed by the radio communication apparatus 2-1 is below a value necessary to demodulate the signal transmitted by the radio communication apparatus 2-2, the radio communication apparatus 2-2 may stop the transmission by intra-BSS SR. Also, the radio communication apparatus 2-2 may stop the transmission by intra-BSS SR in a case that the transmit power that is configurable by (Expression 2) is 0 or a negative value.

The description provided hitherto is for a case that the radio communication apparatus 2-2 uses the communication in the uplink direction as a target on which transmission by intra-BSS SR is performed. This is based on the fact that the base station apparatus 1-1 can establish communication from all the radio communication apparatuses and can be assumed not to be moving in most cases, and it is possible to measure a path loss between the radio communication apparatus and the base station apparatus 1-1 and perform transmission by intra-BSS SR in consideration of the measured path loss. Moreover, because it is possible to determine from the PHY header that communication is being performed in the same radio system (BSS) and is communication in the uplink direction, and thereby to ascertain that the communication is directed to the base station apparatus 1-1, transmission by intra-BSS SR can be performed after the PHY header is demodulated.

On the other hand, in a case that it is possible to regard the radio communication apparatuses that are present in a sufficiently wide radio system as being uniformly distributed and to regard a path loss between two radio communication apparatuses in the radio system as being sufficiently large at a certain probability, transmission by intra-BSS SR may be performed on the communication in the downlink direction. The fact that the communication is in the downlink direction in the same radio system may be determined from the information for identifying the radio system (BSS) and the information for identifying uplink/downlink included in the PHY header.

Next, an example in which transmission by intra-BSS SR is performed in a case that the inside of one radio system (BSS) is split into a plurality of sectors will be described using

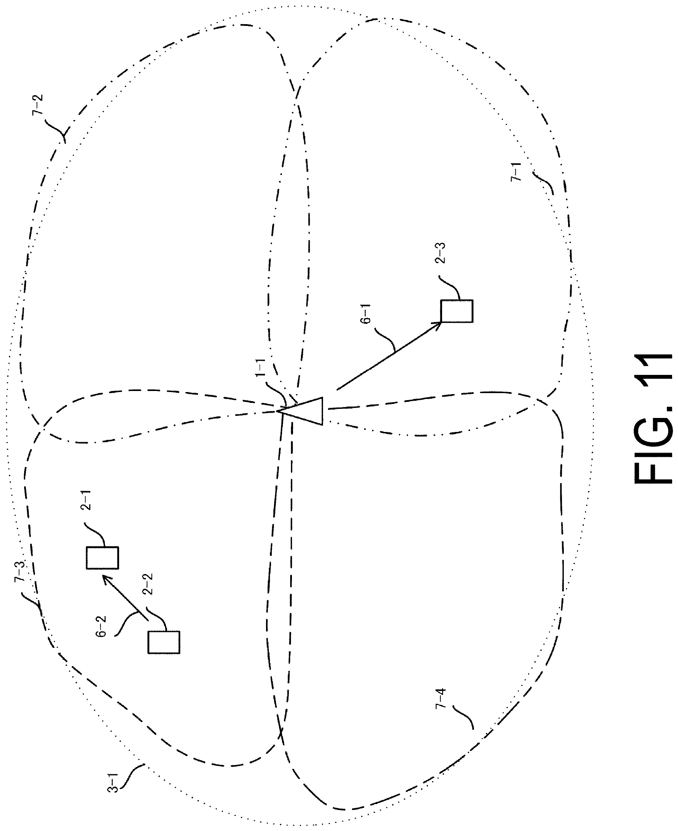

FIG. 11. Among the numerals used in FIG. 11, the same numerals as those in FIG. 5 are the same as those described in FIG. 5. 7-1 to 7-4 denote communication areas (sectors) managed by the base station apparatus 1-1. Although a method in which the base station apparatus 1-1 manages each sector is not limited, as an example, the base station apparatus 1-1 may equip a plurality of beam antennas for constituting each sector and use the beams by switching for each sector. Also, an antenna that can change beams like an array antenna may be used, and different beams may be used for each sector. In the structure using sectors, the base station apparatus 1-1 and the radio communication apparatuses 2-1 to 2-3 add information indicating a sector ID to the PHY header of data to be transmitted. In a case that the sector ID is 0, this means communication using all the sectors. In a case that the sector ID is 1 or more, this means each of the sectors 7-1 to 7-4 is to be used. The radio communication apparatus 2-1 and the radio communication apparatus 2-2 belong to the sector 7-3 and use the sector ID = 3. The radio communication apparatus 2-3 belongs to the sector 7-1 and uses the sector ID = 1. The information indicating the sector may be included in the U-SIG (1406) or the EHT-SIG (1407).

The base station apparatus 1-1 transmits transmission data (6-1) with the sector ID = 1 indicating the sector 7-1 added to the PHY header to the radio communication apparatus 2-3.

Although the radio communication apparatus 2-2 has data to be transmitted to the radio communication apparatus 2-1, the radio communication apparatus 2-2 detects the transmission data (6-1) to be transmitted by the base station apparatus 1-1 through carrier sense and does not perform transmission. The radio communication apparatus 2-2 demodulates the PHY header of the transmission data (6-1) transmitted by the base station apparatus 1-1 and checks that the transmission data (6-1) is for communication inside the radio system 3-1 and that the sector ID that is different from the sector ID to which the radio communication apparatus 2-2 belongs is used, from the details of BSScolor and the sector ID of the transmission data (6-1). Then, NAV (duration information) indicating the length of the signal (6-1) is obtained from the PHY header. Thereafter, the radio communication apparatus 2-2 adjusts the length of the transmission data such that it does not exceed NAV indicating the length of the signal (6-1) and transmits data to the radio communication apparatus 2-1 (6-2) in an overlapping manner on the signal (6-1) after adjustment of the transmit power. Although a method of adjusting the transmit power is not limited, the transmit power may be configured using (Expression 1) and (Expression 2). Also, as information used for controlling power used in intra-BSS SR, information for intra-BSS SR in a case that the sectors are used may be separately provided.

Next, a modification example in which information indicating a destination of communication in the downlink direction is included in the PHY header to enable identification of the communication apparatus as a destination of the communication and SR is performed on the communication in the downlink direction will be described. In this form, as an example, color information (dist-color) indicating a destination is added to the PHY header. dist-color is information indicating the destination and may be information for specifying a radio communication apparatus and, as an example, information obtained by shortening at least any of an MAC address or an association ID (AID) using a Hash function. The MAC address has a 48-bit length, and the association ID has a 16-bit length at a maximum, which may be shortened to a 6-bit length. The bit length after the shortening is not limited to 6 bits, and any bit length may be configured as long as the bit length is sufficient to identify the radio communication apparatus in a radio system (BSS). A radio communication apparatus that has received and demodulated the PHY header included in the transmission data can determine whether the destination of the transmission data is a specific radio communication apparatus or another radio communication apparatus from dist-color included in the PHY header. This is because it is possible to recognize dist-color indicating the specific radio communication apparatus by recognizing at least any of the MAC address, AID, or dist-color of the specific radio communication apparatus in advance. Because dist-color is information obtained by shortening the MAC address, AID, or the like, there may be radio communication apparatuses using the same dist-color, it is possible to use dist-color for determining whether the data is directed to a different radio communication apparatus because a radio communication apparatus with different dist-color cannot be the same radio communication apparatus.

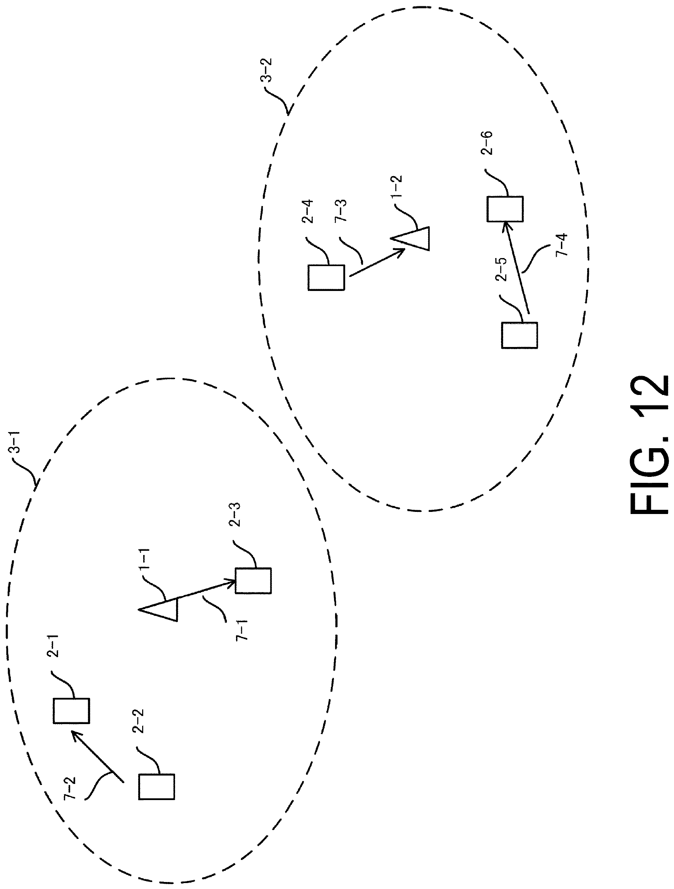

A modification example using dist-color will be described using FIG. 12. Among the numerals used in FIG. 12, the same numerals as those in FIG. 5 are the same as those described in FIG. 5. The base station apparatus 1-1 transmits transmission data (7-1) to the radio communication apparatus 2-3. In this case, the base station apparatus 1-1 includes information indicating that the communication is in the downlink direction and dist-color using AID allocated to the radio communication apparatus 2-3 in the PHY header. The information indicating that the communication is in the downlink direction may be information that can identify whether the communication is directed in the uplink direction. Because the radio communication apparatus 2-2 has received the transmission data (7-1) even though the radio communication apparatus 2-2 has transmission data directed to the radio communication apparatus 2-1, the radio communication apparatus 2-2 determines that the radio medium is being used and waits. The radio communication apparatus 2-2 receives the transmission data (7-1) and demodulates the PHY header included in the received data (7-1). In a case that the information indicating that the communication is in the downlink direction and dist-color are included in the PHY header, whether dist-color indicates the radio communication apparatus 2-1 is checked. In a case that dist-color does not indicate the radio communication apparatus 2-1, the radio communication apparatus 2-2 may configure transmit power and may transmit transmission data (7-2) directed to the radio communication apparatus 2-1. The power configuration may be performed in accordance with the aforementioned procedure. As for the information for controlling power used in intra-BSS SR used at this time, the control information used in SR for the communication in the downlink direction may be configured separately from the control information used in SR for the communication in the uplink direction. Although the procedure for checking both the information indicating that the communication is in the downlink direction and dist-color has been described hitherto, only dist-color may be checked.

Next, an example of a case that SR is performed on transmission data through a direct link will be described. A radio communication apparatus 2-5 transmits transmission data (7-4) directed to a radio communication apparatus 2-6. dist-color is included in a PHY header of the transmission data (7-4). The radio communication apparatus 2-5 may or may not include information indicating either the uplink direction or the downlink direction in the PHY header, and in a case that the information is included, the information may indicate the downlink direction. Also, the radio communication apparatus 2-5 may include information indicating direct link communication in the PHY header. Because the radio communication apparatus 2-4 has received the transmission data (7-4) even though the radio communication apparatus 2-4 has transmission data directed to the base station apparatus 1-2, the radio communication apparatus 2-4 determines that the radio medium is being used and waits. The radio communication apparatus 2-4 receives the transmission data (7-4) and demodulates the PHY header included in the received data (7-4). In a case that the PHY header includes dist-color, and dist-color does not indicate that the data has been directed to the base station apparatus 1-2, the radio communication apparatus 2-4 configures transmit power and transmits transmission data (7-3) to the base station apparatus 1-2. The power configuration may be performed in accordance with the aforementioned procedure. As for the information for controlling power used in intra-BSS SR used at this time, the control information used in SR for the communication in the downlink direction may be configured separately from the control information used in SR for the communication in the uplink direction. Although the procedure for checking both the information indicating that the communication is in the downlink direction and dist-color has been described hitherto, only dist-color may be checked.

It is possible to increase the transmission opportunities (TXOP) of the radio communication apparatus and to improve transmission efficiency through the operations as described above. The increase in transmission opportunities (TXOP) has an effect of reducing latency. Therefore, SR may be performed in a case that there is a configuration for performing low-latency communication from an higher layer or in a case that there has been a notification that data included in a radio frame is data of a low-latency application. In this manner, it is possible to improve the transmission efficiency in conjunction with the application.

### 2. Matters Common to All Embodiments

Although the communication apparatus according to the present invention can perform communication in a frequency band (frequency spectrum) that is a so-called unlicensed band that the communication apparatus does not need to be allowed by a nation or a region to use, the available frequency band is not limited thereto. The communication apparatus according to the present invention can exhibit its effect in a frequency band called a white band, which is actually not used for the purpose of preventing frequency jamming regardless of a nation or a region allowing utilization thereof for a specific service (for example, a frequency band allocated for television broadcasting or a frequency band which is not used depending on regions), or a shared spectrum (shared frequency band) which is expected to be shared by a plurality of service providers, for example.

A program that operates in the radio communication apparatus according to the present invention is a program (a program for causing a computer to function) for controlling the CPU or the like to implement the functions of the aforementioned embodiments related to the present invention. The information handled by these apparatuses is temporarily held in a RAM at the time of processing, is then stored in various types of ROMs and HDDs, and is read by the CPU as necessary to be corrected and written. Here, a semiconductor medium (ROM, a non-volatile memory card, or the like, for example), an optical recording medium (DVD, MO, MD, CD, BD, or the like, for example), a magnetic recording medium (magnetic tape, a flexible disk, or the like, for example), and the like can be given as examples of recording media for storing the programs. In addition to implementing the functions of the aforementioned embodiments by performing loaded programs, the functions of the present invention are implemented by the programs running cooperatively with an operating system, other application programs, or the like in accordance with indications included in those programs.

In a case of delivering these programs to market, the programs can be stored and distributed in a portable recording medium, or transferred to a server computer connected via a network such as the Internet. In this case, the storage device serving as the server computer is also included in the present invention. Also, a part or an entirety of the communication apparatus in the aforementioned embodiments may be implemented as an LSI that is typically an integrated circuit. The functional blocks of the communication apparatus may be individually implemented as chips or may be partially or completely integrated into a chip. In a case that the functional blocks are integrated, an integrated circuit controller for controlling them is added.

The circuit integration technique is not limited to LSI, and the integrated circuits for the functional blocks may be implemented as dedicated circuits or a general-purpose processor. Moreover, in a case that with advances in semiconductor technology, a circuit integration technology with which an LSI is replaced appears, it is also possible to use an integrated circuit based on the technology.

Note that the invention of the present application is not limited to the aforementioned embodiments. The radio communication apparatus according to the invention of the present application is not limited to the application in the mobile station apparatus, and, needless to say, can be applied to a fixed-type electronic apparatus installed indoors or outdoors, or a stationary-type electronic apparatus, for example, an AV apparatus, a kitchen apparatus, a cleaning or washing machine, an air-conditioning apparatus, office equipment, a vending machine, and other household apparatuses.

The embodiments of the invention have been described in detail thus far with reference to the drawings, but the specific configuration is not limited to the embodiments. Other designs and the like that do not depart from the essential spirit of the invention also fall within the scope of the aspects.

### Industrial Applicability

The present invention can be preferably used in a communication apparatus and a communication method.

### Reference Signs List

1-1, 1-2, 2-1 to 2-6, 2A, 2B Radio communication apparatus
3-1, 3-2 Management range
7-1, 7-2, 7-3, 7-4 Sector
10-1 Radio communication apparatus
10001-1 Higher layer circuitry
10002-1 (Autonomous distributed) control circuitry
10002a-1 CCA circuitry
10002b-1 Backoff circuitry
10002c-1 Transmission determiner
10003-1 Transmit circuitry
10003a-1 Physical layer frame generator
10003b-1 Radio transmit circuitry
10004-1 Receive circuitry
10004a-1 Radio receive circuitry
10004b-1 Signal demodulator
10004c-1 Evaluator
10005-1 Antenna
100-1, 100-3, 100-6, 100-11 Busy state
100-4, 100-7 Random backoff
100-2, 100-5, 100-8, 100-10 Radio frame
1401, 1421 Radio frame

## Claims

1. A radio communication apparatus configured to communicate with a base station apparatus and another radio communication apparatus, the radio communication apparatus comprising:
a receive circuitry configured to receive a radio frame;
a transmit circuitry configured to transmit a radio frame; and
a control circuitry configured to control transmission and/or reception of a radio frame,
wherein the receive circuitry receives the radio frame,
a PHY header of the received radio frame is demodulated, and
in a case that first information, included in the PHY header currently being received, to identify a radio system indicates a radio system where the radio communication apparatus belongs, and
in a case that second information included in the PHY header currently being received is specific information,
a radio frame is transmitted to fit within NAV of the PHY header currently being received.

2. The radio communication apparatus according to claim 1,
wherein the second information is information indicating a sector, and
in a case that the second information does not indicate a sector where the radio communication apparatus belongs,
the radio frame is transmitted.

3. The radio communication apparatus according to claim 1,
wherein the second information is information indicating whether communication is directed to the base station apparatus, and
in a case that the second information indicates that the communication is directed to the base station apparatus,
the radio frame is transmitted.

4. The radio communication apparatus according to claim 1,
wherein the second information is information indicating a radio communication apparatus that is a destination, and
in a case that the second information does not indicate a destination of the radio frame that is transmitted,
the radio frame is transmitted.

5. The radio communication apparatus according to claim 1,
wherein the second information is information indicating whether a direct link is used, and
in a case that the second information indicates that the direct link is used,
the radio frame is transmitted.

6. A radio communication method used in a radio communication apparatus that communicates with a base station apparatus and another radio communication apparatus, the method comprising the steps of:
receiving a radio frame;
demodulating a PHY header of the received radio frame; and
transmitting, in a case that first information, included in a PHY header currently being received, to identify a radio system indicates a radio system where the radio communication apparatus belongs, and
in a case that second information included in the PHY header currently being received is specific information,
a radio frame to fit within NAV of the PHY header currently being received.
